# EUROPEAN PATENT SPECIFICATION

(11) **EP 2 832 219 B1**
(45) Date of publication and mention of the grant of the patent: **26.12.2018**
(21) Application number: 12873009.0
(22) Date of filing: 30.03.2012
(51) Int. Cl.: A61D 17/00

(54) **ESTRUS NOTIFICATION METHOD, ESTRUS NOTIFICATION DEVICE AND ESTRUS NOTIFICATION PROGRAM**
ÖSTRUS-BENACHRICHTIGUNGSVERFAHREN, ÖSTRUS-BENACHRICHTIGUNGSVORRICHTUNG UND ÖSTRUS-BENACHRICHTIGUNGSPROGRAMM
PROCÉDÉ DE NOTIFICATION DE CHALEURS, DISPOSITIF DE NOTIFICATION DE CHALEURS ET PROGRAMME DE NOTIFICATION DE CHALEURS

(43) Date of publication of application: 04.02.2015
(73) Proprietor: FUJITSU LIMITED, Kawasaki-shi Kanagawa 211-8588 (JP)
(72) Inventor: WATANABE, Katsuyoshi, Kawasaki-shi Kanagawa 211-8588 (JP); MOTOSHIMA, Toshimi, Fukuoka-shi Fukuoka 814-8589 (JP); KANAMORI, Akihito, Fukuoka-shi Fukuoka 814-8589 (JP); INENAGA, Mitsuhisa, Fukuoka-shi Fukuoka 814-8589 (JP); UCHINO, Tetsuya, Fukuoka-shi Fukuoka 814-8589 (JP); YAMANO, Daiji, Kawasaki-shi Kanagawa 211-8588 (JP)
(74) Representative: Haseltine Lake LLP
(86) International application number: PCT/JP2012/058718
(87) International publication number: WO 2013/145302

(56) References cited:
- CN-A- 102 100 185
- JP-A- H11 128 210
- JP-A- 2002 181 927
- JP-A- 2008 092 878
- JP-A- 2008 148 569
- US-A1- 2008 147 458
- US-A1- 2011 125 065

## Description

### TECHNICAL FIELD

The present invention is related to an estrus notifying method, an estrus notifying apparatus, and an estrus notifying program.

### BACKGROUND ART

Conventionally, when livestock animals such as cattle are raised on a pasture, a worker of the livestock farm periodically goes to the pasture area to check whether livestock animals have an abnormality. For example, to manage estrus of pastured cows, a worker goes to the pasture area almost every day to actually visually check the presence of a cow exhibiting estrous behavior.

In a proposed technique for managing livestock animals, for example, a light emitting unit is attached to a belt wound around a livestock animal and the light emitting unit is controlled so as to find a given livestock animal (see. e.g., Patent Document 1). In another proposed technique, the step count of a milk cow is detected to identify estrus when the step count increases by a given number (see. e.g., Patent Document 2).

In a further proposed technique, a main terminal capable of public wireless communication incorporating a global positioning system (GPS) receiver is attached to a livestock animal defined as a leader of a herd while terminals capable of short-distance communication with the main terminal is attached to the other livestock animals of the herd to enable tracking of the other livestock animals in the herd (Patent Document 3).

Patent Document 1: Japanese Laid-Open Patent Publication No. 2008-11837
Patent Document 2: Japanese Laid-Open Patent Publication No. 2003-189751
Patent Document 3: Published Japanese-Translation of PCT Application, Publication No. 2005-520524
United States patent publication US2008/0147458A1 discloses a breeding support system including at least one information terminal for processing breeding information associated with breeding work of at least one individual breeding object, the system comprising: individual information collecting means for collecting individual information indicating a time-variable change of an individual condition of the individual breeding object; specified breeding work requirement determination means for determining a requirement for a specified breeding work from among all breeding work in accordance with a profile of the time-variable change of the individual condition; breeding guidance generation means for generating at least one breeding guidance announcing a requirement of the specified breeding work determined; and breeding guidance supply means for supplying the generated breeding guidance as the breeding information to the information terminal.
United States patent publication US2011/0125065A1 discloses a method and device for detecting estrus in animals by sensing the motion of an animal over a period of time and determining when the sensed motion is not related to eating. Based on the sensed motion that is not related to eating the estrus in the animal is identified.
Chinese patent publication CN102100185A discloses a system comprising at least one acceleration detection unit arranged on a cow, wherein all the acceleration detection units are connected with a pace analysis unit so as to acquire and analyze cow pace information; the pace analysis unit is connected with a wireless communication transmitting unit; the wireless communication transmitting unit is connected with a wireless communication receiving unit in a wireless mode; and the wireless communication receiving unit is connected with an upper computer so as to store the cow pace information and analyze the current state of the cow by combining a preset program.

### DISCLOSURE OF INVENTION

### PROBLEM TO BE SOLVED BY THE INVENTION

However, in the conventional techniques, if a GPS function is used for tracking livestock animals, the battery life is made shorter due to transmission processes for position information, etc., repeatedly executed by the GPS function, causing a problem of an increased workload of a worker for battery replacement, etc. Although the step counts of livestock animals are collected through communications devices attached to respective livestock animals via a relay device disposed in the pasture area in some forms of systems, even in such a case, the relay device has a communicable area, and the information acquired only from the relay device merely gives information indicative of the presence in the area, i.e., vague position information.

An object of the present invention is to provide an estrus notifying method as defined in claim 1, an estrus notifying apparatus as defined in claim 3 and an estrus notifying program as defined in claim 5 capable of suppressing battery consumption to a requisite minimum and detecting more detailed positions of livestock animals so as to solve the problem of the conventional techniques described above. Preferred embodiments are according to the dependent claims.

### MEANS FOR SOLVING PROBLEM

According to one aspect of the present invention, an estrus notifying method, an estrus notifying apparatus, and an estrus notifying program that determine estrus based on a step-count measurement result from a step-count measuring device equipped to each livestock animal each belonging to a herd are proposed that acquire the step-count measurement result of each livestock animal; determine for each of livestock animal and based on the step-count measurement result, whether the livestock animal is in estrus; search for a given position information communications device upon determining that a given livestock animal is in estrus among the livestock animals, the given position information communications device corresponding to the given livestock animal, and the searching being based on information of the herd to which the given livestock animal belongs and information on a position information communications device that is capable of outputting position information and equipped to any among the livestock animals belonging to the herd; transmit to the given position information communications device, an activation instruction for a function of the given position information communications device, the function being for acquiring position information of the given position information communications device; and output the position information received from the given position information communications device.

### EFFECT OF THE INVENTION

According to one aspect of the present invention, an effect is achieved in that battery consumption can be suppressed to a requisite minimum and more detail positions of livestock animals can be detected.

### BRIEF DESCRIPTION OF DRAWINGS

FIG. 1 is an explanatory view of an example of an estrus notifying method according to an embodiment;
FIG. 2 is an explanatory view of a system configuration example of an estrus notifying system 200;
FIG. 3 is a block diagram of a hardware configuration example of a communications device 101;
FIG. 4 is a block diagram of a hardware configuration example of a GPS communications device 107;
FIG. 5 is a block diagram of a hardware configuration example of a relay device 102;
FIG. 6 is a block diagram of a hardware configuration of an estrus notifying apparatus 104, etc.;
FIG. 7 is an explanatory view of an example of storage contents of a measurement result information table 201;
FIG. 8 is an explanatory view of an example of storage contents of a step count DB 202;
FIG. 9 is an explanatory view of an example of storage contents of a herd management DB 203;
FIG. 10 is an explanatory view of an example of storage contents of a GPS communications device DB 204;
FIG. 11 is a block diagram of a functional configuration example of the estrus notifying apparatus 104;
FIG. 12 is an explanatory view (part one) of an example of a screen displayed on the client apparatus 105;
FIG. 13 is an explanatory view (part two) of an example of a screen displayed on the client apparatus 105;
FIG. 14 is a flowchart of an example of an estrus notifying process procedure of the relay device 102;
FIG. 15 is a flowchart (part one) of an example of an estrus notifying process procedure of the estrus notifying apparatus 104;
FIG. 16 is a flowchart (part two) of an example of the estrus notifying process procedure of the estrus notifying apparatus 104;
FIG. 17 is a flowchart (part three) of an example of the estrus notifying process procedure of the estrus notifying apparatus 104;
FIG. 18 is a flowchart of an example of an estrus notifying process procedure of the GPS communications device 107; and
FIG. 19 is a flowchart of an example of an estrus notifying process procedure of the client apparatus 105.

### BEST MODE(S) FOR CARRYING OUT THE INVENTION

Embodiments of an estrus notifying method, an estrus notifying apparatus, and an estrus notifying program according to the present invention will be described in detail below with reference to the accompanying drawings.

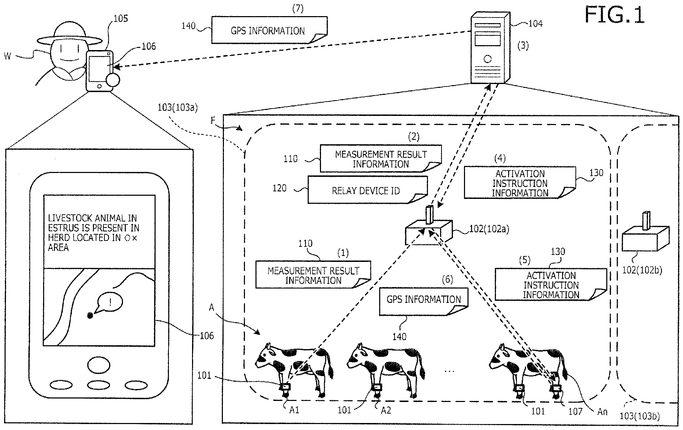

FIG. 1 is an explanatory view of an example of an estrus notifying method according to this embodiment. In FIG. 1, livestock animals A are raised in a site of a farm F managed by a worker W. The worker W is a person engaged in livestock farming. The farm F refers to facilities including the pasture area for pasturing the livestock animals A. The livestock animals A are animals capable of moving inside the site of the farm F, for example, the pasture area of the farm F. For example, the livestock animals A may be animals moving by ambulation such as cattle, pigs, and horses. The livestock animals A (A1 to An) are animals forming a herd of n animals when moving.

The livestock animals A1 to An are equipped with respective communications devices 101. In this case, the communications devices 101 are portable computers that measure the step counts of the livestock animals A. For example, when walking, the livestock animals A first put out a right leg toward the ground in the direction of travel. When the right leg is planted on the ground, the livestock animals A then put out a left leg toward the ground in the direction of travel. When the left leg is planted on the ground, the livestock animals A repeat the motion such as putting out a right leg again. In particular, the step counts of the livestock animals A can be defined as the numbers of times the livestock animals A put out a right leg or a left leg toward the ground in the direction of travel.

For example, when a state of a livestock animal A changes to an abnormal state different from a normal state due to, for example, estrus, disease, giving birth, or the appearance of a natural predator, the step count of the livestock animal A increases or decreases as compared to the normal state. Estrus in this case refers to an excited state associated with reproductive activity of the livestock animal A. Disease refers to a poor or undesirable state of the livestock animal A.

By using the changes in the step count a livestock animal A at the occurrence of an abnormal state of the livestock animal A, the worker W can know the occurrence of a change in the state of the livestock animal A from a result of measurement of the step count if the step count of the livestock animal A is measured in advance.

Among the livestock animals A1 to An forming a herd, a given livestock animal A is equipped with the communications device 101 as well as with a GPS communications device 107 having a function of acquiring position information thereof. In the example of FIG. 1, the livestock animal An is equipped with the GPS communications device 107. Since the livestock animals A1 to An forming a herd move in the same way, the number of the given livestock animals An is preferably one per herd, and two animals are sufficient including a spare livestock animal A. The position information of the GPS communications device 107 will hereinafter be referred to as "GPS information". The GPS information (e.g., GPS information 140) is information for identifying a point on a map and is information of latitude and longitude, for example.

The communications devices 101 and the GPS communications device 107 can communicate with multiple relay devices 102 disposed on the premises of the farm F. The relay devices 102 are computers capable of communication with the communications devices 101, the GPS communications device 107, and an estrus notifying apparatus 104 described later. The multiple relay devices 102 are respectively disposed at different positions on the farm F. The communications devices 101 transmit measurement result information 110 indicative of measurement results to a communicable relay device 102.

For example, if the communications devices 101 and the GPS communications device 107 are located within a communications area 103a of a relay device 102a denoted by reference numeral 102a in FIG. 1, the communications devices 101 and the GPS communications device 107 can communicate with the relay device 102a. If the communications devices 101 and the GPS communications device 107 are located within a communications area 103b of a relay device 102b denoted by reference numeral 102b in FIG. 1, the communications devices 101 and the GPS communications device 107 can communicate with the relay device 102b. The communications area 103, for example, covers a 150-meter radius range.

When the measurement result information 110 is received from the communications devices 101 or if the GPS information 140 of the GPS communications device 107 is received from the GPS communications device 107, the relay devices 102 transmit the received measurement result information 110 or the GPS information 140 to the estrus notifying apparatus 104.

The estrus notifying apparatus 104 is a computer connected to the multiple relay devices 102 to be capable of receiving the measurement result information 110 of the communications devices 101 and the GPS information 140 of the GPS communications device 107 via any of the relay devices 102. The estrus notifying apparatus 104 can communicate and connect with a client apparatus 105 via a given line.

The client apparatus 105 is a portable computer having a display 106 and capable of communicating with the estrus notifying apparatus 104. When information from the estrus notifying apparatus 104 is received, the client apparatus 105 displays an image based on the received information on the display 106.

For example, a technique of finding estrus of a cow will be taken as an example as a technique of finding an abnormal state of the pastured livestock animals A. For example, the worker W periodically goes to the pasture area to actually visually check the presence/absence of a cow in estrus in one technique. This technique requires the worker W to search the broad farm F having one side of several hundred meters to several kilometers and therefore, not only takes time but also is troublesome for the worker W, resulting in high labor costs. Thus, the worker W may give up mating during pasture in some cases and, if mating of a cow in estrus is not performed, i.e., if mating is not performed while a possibility of impregnation is high, this causes an a financial loss.

Alternatively, the worker W may put cows out to pasture along with breeding cattle for natural mating in some cases. However, natural mating with breeding cattle is not preferable in terms of leaving better offspring in current livestock farming and is not effective because only the skilled worker W can handle bulls because of fierceness of bulls.

In another technique, since a cow has a characteristic of increasing the number of steps during estrus, a pedometer is equipped to a cow and, if the pedometer exceeds a given threshold value, an alarm is issued from a communications device disposed at a given position in the pasture area to notify the worker W of the position of the communications device. However, when the alarm is received in this technique, the worker W is often performing another operation such as cleaning a cowshed and, in such a case, the worker W cannot immediately go to find the corresponding cow. Even if the worker W goes to the location of the communications device issuing the alarm after some time from the reception of the alarm, the cow in estrus cannot be found since the livestock animals A are constantly moving and the worker W must search around in the end, which is troublesome for the worker W.

To know the position of a cow in estrus, a communications device having a GPS function is equipped to each cow in a further technique. However, equipping a communications device having a GPS function to each cow is costly and, since electronic signals are continuously transmitted by the GPS function, the battery acting as a drive power source is quickly consumed, necessitating frequent battery replacement or replacement of the communications device having a GPS function itself. Therefore, this technique is not suitable for actual operation since a high initial cost is required and the battery or device replacement is troublesome for the worker W.

Therefore, in this embodiment, if a livestock animal A in estrus is found from a change in the step count, the GPS communications device 107 is activated that is equipped to the given livestock animal An defined in advance in the herd to which the livestock animal A belongs, thereby suppressing power consumption of the battery of the GPS communications device 107 and reducing the workload required for tracking the livestock animal A.

An example of an estrus notifying method of an embodiment will hereinafter be described. In this embodiment, by way of example, estrus is taken as an example of an abnormal state of the livestock animal A. In the description of this embodiment, the livestock animal A is a cow. A cow has a characteristic of increasing the number of steps per unit time during estrus as compared to when the cow is not in estrus and this characteristic of a cow is utilized.
(1) The communications device 101 measures the step count of the livestock animal A and transmits the measurement result information 110 at given transmission intervals to the relay device 102 located in the communications area 103. The given transmission interval is one hour, for example.
(2) The relay device 102 receives the measurement result information 110 from the communications device 101 and transmits the received measurement result information 110 and relay device identification information (relay device ID) 120 thereof to the estrus notifying apparatus 104.
(3) The estrus notifying apparatus 104 receives the measurement result information 110 from the relay device 102 and determines whether the step count of the livestock animal A satisfies a given condition based on the received measurement result information 110. For example, if it is determined that the step count of the livestock animal A per unit time is greater than or equal to a threshold value Th, i.e., if the livestock animal A shows indication of estrus, the estrus notifying apparatus 104 determines that the step count of the livestock animal A satisfies the given condition.
   The estrus notifying apparatus 104 stores the communications devices 101 equipped to the respective livestock animals A forming a herd and the GPS communications device 107 equipped to any livestock animal An of the livestock animals A forming the herd in a correlated manner for each herd.
   If the step count of the livestock animal A satisfies the given condition, the estrus notifying apparatus 104 searches for the GPS communications device 107 correlated with the communication 101. In other words, if the step count of the livestock animal A satisfies the given condition, the livestock animal An equipped with the GPS communications device 107 can be identified from the livestock animals belonging to the same herd as the livestock animal A (e.g., the livestock animal A1) equipped with the communications device 101.
(4) The estrus notifying apparatus 104 transmits activation instruction information 130 via the relay device 102 at which the livestock animal A is located, to the GPS communications device 107 equipped to the given livestock animal An.
(5) The GPS communications device 107 has a battery. The battery is normally powered off. The battery includes a main battery for a main power source for acquiring the GPS information 140 and a sub-battery for a sub-power source for receiving the activation instruction information 130 from the estrus notifying apparatus 104. In this embodiment, the battery refers to the battery for a main power source. When the GPS information is acquired by utilizing the main battery, power consumption of the battery is larger and a duration time is shorter as compared to when the activation instruction is received by utilizing the sub-battery. The sub-power source is always on. When receiving the activation instruction information 130, via the relay device 102, from the estrus notifying apparatus 104, the GPS communications device 107 turns on the main power source.
(6) The GPS communications device 107 acquires the GPS information 140 and transmits the acquired GPS information 140, via the relay device 102, to the estrus notifying apparatus 104. The frequency of the acquisition is every 20 seconds, for example.
(7) The estrus notifying apparatus 104 transmits to the client apparatus 105, the GPS information 140 received via the relay device 102, from the GPS communications device 107. The client apparatus 105 receives the GPS information 140 from the estrus notifying apparatus 104 and displays an image on the display 106, based on the GPS information 140. For example, the client apparatus 105 displays the position of the herd to which the livestock animal A in estrus belongs.

As described above, according to the estrus notifying method of the embodiment, if a livestock animal A showing indication of estrus is found from a change in the step count of the livestock animal A, a herd including the livestock animal A can be determined and the GPS communications device equipped to the given livestock animal An in the herd can be activated. As a result, the power consumption of the battery for the main power source can be suppressed by not always activating the main power source of the GPS communications device 107. In particular, since a detailed position is not detected when tracking of the livestock animal A is not necessary and a detailed position is frequently detected only when the tracking is necessary, battery consumption of the GPS communications device 107 can be suppressed to a requisite minimum. Therefore, the replacement cycle of the GPS communications device 107 or the battery of the GPS communications device 107 can be made longer to reduce the workload required for tracking the livestock animal A.

### (System Configuration Example of Estrus notifying system 200)

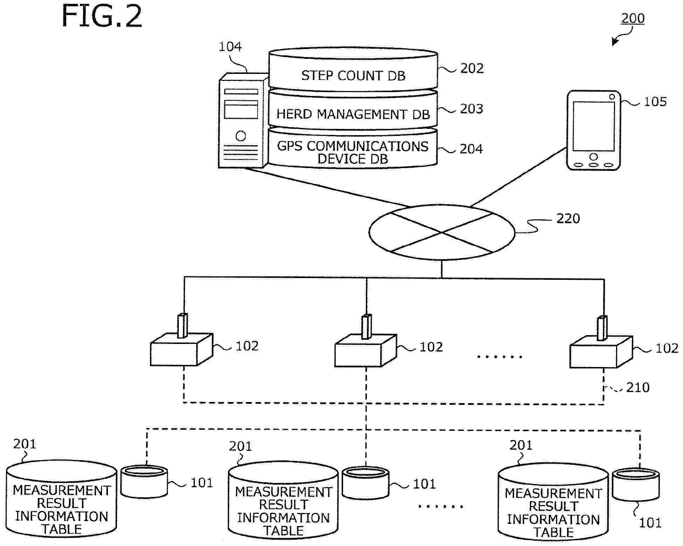

A system configuration example of an estrus notifying system 200 will be described. FIG. 2 is an explanatory view of a system configuration example of the estrus notifying system 200. In FIG. 2, the estrus notifying system 200 includes the multiple communications devices 101, the multiple relay devices 102, and the estrus notifying apparatus 104.

In the estrus notifying system 200, the communications devices 101 and the relay devices 102 are connected via a wireless communications network 210. Each of the communications devices 101 and the relay devices 102 has a given range around the communications device or the relay device, for example, a range of a 100-meter radius around the communications device or the relay device, as a communicable area enabling communication through the wireless communications network 210. If the communications device 101 and the relay device 102 are in a positional relationship enabling the communication, the communications device 101 and the relay device 102 are connected through the wireless communications network 210. For example, the wireless communications network 210 can be implemented by applying wireless communication enabling communication within a range of 50 to 200 meters.

The relay devices 102, the estrus notifying apparatus 104, and the client apparatus 105 are connected via a network 220. For example, the network 220 may be the Internet, a local area network (LAN), a wide area network (WAN), etc.

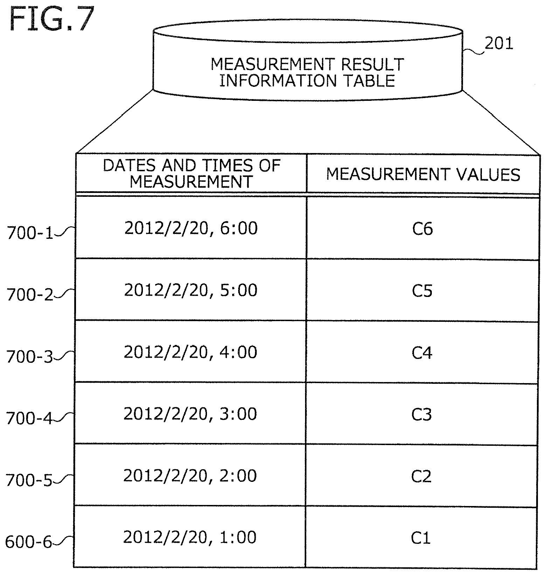

The communications devices 101 have measurement result information tables 201, etc., and are portable computers equipped to the respective livestock animals A raised in the farm F. Each of the communications devices 101 has a measurement function of measuring the step count of the livestock animal equipped with the communications device 101 and a communication function through the wireless communications network 210. For example, the communications devices 101 can be implemented by applying pedometers to which a communication function through the wireless communications network 210 is added. Storage contents of the measurement result information tables 201 will be described later with reference to FIG. 7.

The relay devices 102 are disposed on the premises of the farm F and are computers having a communication function through the wireless communications network 210 and a communication function through the network 220. The multiple relay devices 102 are respectively disposed at different installation positions.

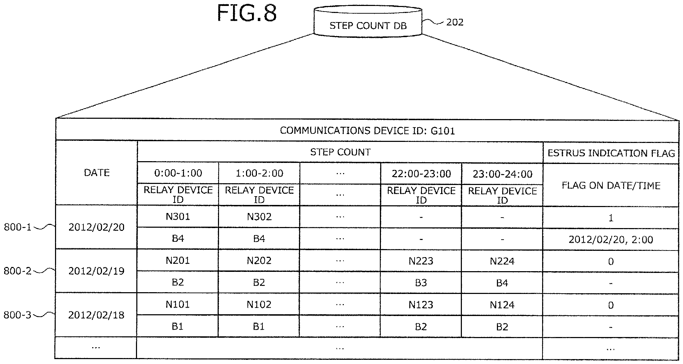

The estrus notifying apparatus 104 has a step count DB 202, a herd management DB 203, a GPS communications device DB 204, etc., and is a computer having a communication function through the network 220. For example, the estrus notifying apparatus 104 can be implemented by applying a server included in a cloud computing system and a personal computer (PC) or a notebook PC used by a manager or a worker W of the farm F. Storage contents of the step count DB 202, the herd management DB 203, and the GPS communications device DB 204 will be described later with reference to FIGs. 8 to 10.

The client apparatus 105 is a computer having a communication function through the network 220. The client apparatus 105 can be implemented by applying a PC or a notebook PC, a portable telephone, and a smartphone used by a worker W of the farm F.

### (Hardware Configuration Example of Communications device 101)

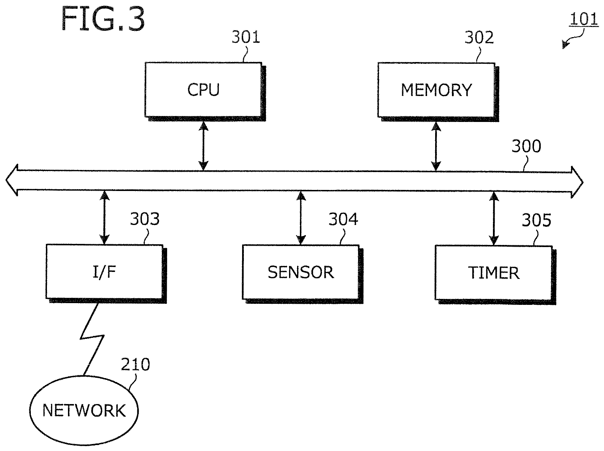

A hardware configuration example of the communications device 101 will be described. FIG. 3 is a block diagram of a hardware configuration example of the communications device 101. In FIG. 3, the communications device 101 has a central processing unit (CPU) 301, memory 302, an interface (I/F) 303, a sensor 304, and a timer 305. The constituent elements are connected to each other through a bus 300.

The CPU 301 is responsible for general control of the communications device 101. The memory 302 includes read only memory (ROM), random access memory (RAM), and flash ROM. The ROM and the flash ROM store various programs such as a boot program, for example. The RAM is used as a work area of the CPU 301.

The I/F 303 is connected through a communication line to the wireless communications network 210 and is connected via the wireless communications network 210 to another device (such as the relay device 102). The I/F 303 is responsible for an internal interface with the wireless communications network 210 and controls the input and output of data with respect to external devices.

The sensor 304 outputs information for detecting behavior of the communications device 101. For example, the sensor 304 is implemented by using a gyro sensor, a three-axis acceleration sensor, etc., and when acceleration occurs in the communications device 101, the sensor 304 outputs information corresponding to the acceleration. The timer 305 has a time measuring function. For example, the timer 305 measures the actual time. The timer 305 may measure an elapsed time from a given time.

### (Hardware Configuration Example of GPS Communications device 107)

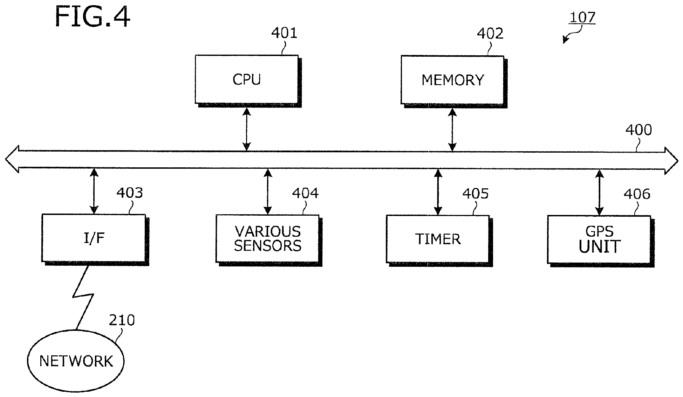

A hardware configuration example of the GPS communications device 107 will be described. FIG. 4 is a block diagram of a hardware configuration example of the GPS communications device 107. In FIG. 4, the GPS communications device 107 has a CPU 401, memory 402, an I/F 403, various sensors 404, a timer 405, and a GPS unit 406. The constituent elements are connected to each other through a bus 400.

The CPU 401 is responsible for general control of the GPS communications device 107. The memory 402 includes ROM, RAM, and flash ROM. The ROM and the flash ROM store various programs such as a boot program, for example. The RAM is used as a work area of the CPU 401.

The I/F 403 is connected through a communication line to the wireless communications network 210 and is connected via the wireless communications network 210 to another device (such as the relay device 102). The I/F 403 is responsible for an internal interface with the wireless communications network 210 and controls the input and output of data with respect to external devices.

The various sensors 404 are sensors, such as a speed sensor, an acceleration sensor, and an angular speed sensor, outputting information enabling determination of the position and behavior of the GPS communications device 107. Output values of the various sensors 404 are used to calculate the current position of the GPS communications device 107 by the CPU 401 and measurement of amounts of changes in speed and direction. The timer 405 has a time measuring function. For example, the timer 405 measures the actual time. The timer 405 may measure an elapsed time from a given time.

The GPS communications device 107 has a GPS unit 406. The GPS unit 406 receives signals from GPS satellites and outputs GPS information indicative of the current position of the GPS communications device 107.

### (Hardware Configuration Example of Relay Device 102)

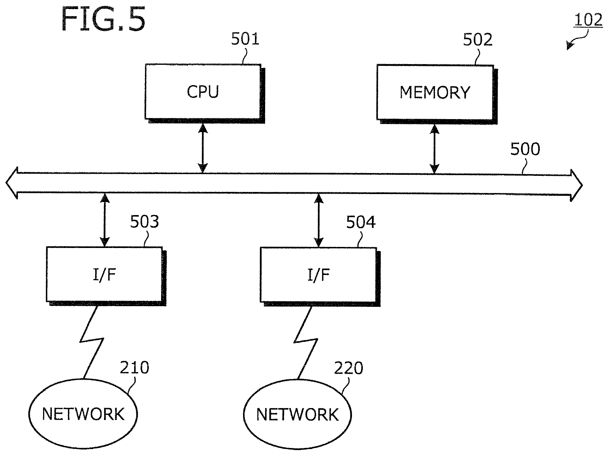

A hardware configuration example of the relay device 102 will be described. FIG. 5 is a block diagram of a hardware configuration example of the relay device 102. In FIG. 5, the relay device 102 has a CPU 501, memory 502, an I/F 503, and an I/F 504. The constituent elements are connected to each other through a bus 500.

The CPU 501 is responsible for general control of the relay device 102. The memory 502 includes ROM, RAM, and flash ROM. The ROM and the flash ROM store various programs such as a boot program, for example. The RAM is used as a work area of the CPU 501.

The I/F 503 is connected through a communication line to the wireless communications network 210 and is connected via the wireless communications network 210 to another device, such as the communications devices 101 and the GPS communications device 107. The I/F 504 is connected through a communication line to the network 220 and is connected via the network 220 to another device, such as the estrus notifying apparatus 104. The I/F 503 and the I/F 504 are responsible for interface between the wireless communications network 210/the network 220 and the inside and controls the input and output of data with respect to external devices.

### (Hardware Configuration Example of Estrus Notifying Apparatus 104, etc.)

A hardware configuration example of the estrus notifying apparatus 104 and the client apparatus 105 will be described. In this example, the estrus notifying apparatus 104 and the client apparatus 105 will simply be referred to as the "estrus notifying apparatus 104, etc."

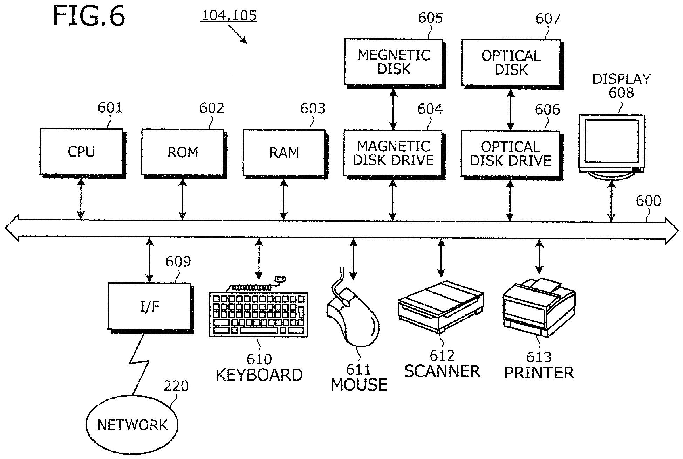

FIG. 6 is a block diagram of a hardware configuration of the estrus notifying apparatus 104, etc. according to the embodiments. As depicted in FIG. 6, the estrus notifying apparatus 104, etc. includes a central processing unit (CPU) 601, read-only memory (ROM) 602, random access memory (RAM) 603, a magnetic disk drive 604, a magnetic disk 605, an optical disk drive 606, an optical disk 607, a display 608, an interface (I/F) 609, a keyboard 610, a mouse 611, a scanner 612, and a printer 613, respectively connected by a bus 600.

The CPU 601 governs overall control of the estrus notifying apparatus 104, etc. The ROM 602 stores therein programs such as a boot program. The RAM 603 is used as a work area of the CPU 601. The magnetic disk drive 604, under the control of the CPU 601, controls the reading and writing of data with respect to the magnetic disk 605. The magnetic disk 605 stores therein data written under control of the magnetic disk drive 604.

The optical disk drive 606, under the control of the CPU 601, controls the reading and writing of data with respect to the optical disk 607. The optical disk 607 stores therein data written under control of the optical disk drive 606, the data being read by a computer.

The display 608 displays, for example, data such as text, images, functional information, etc., in addition to a cursor, icons, and/or tool boxes. A cathode ray tube (CRT), a thin-film-transistor (TFT) liquid crystal display, a plasma display, etc., may be employed as the display 608.

The I/F 609 is connected to the network 220 through a communication line and is connected to other apparatuses (e.g., the relay devices 102 and the client apparatus 105) through the network 220. The I/F 609 administers an internal interface with the network 220 and controls the input and output of data with respect to external apparatuses. For example, a modem or a LAN adaptor may be employed as the I/F 609.

The keyboard 610 includes, for example, keys for inputting letters, numerals, and various instructions and performs the input of data. Alternatively, a touch-panel-type input pad or numeric keypad, etc. may be adopted. The mouse 611 is used to move the cursor, select a region, or move and change the size of windows. A track ball or a joy stick may be adopted provided each respectively has a function similar to a pointing device.

The scanner 612 optically reads an image and takes in the image data into the estrus notifying apparatus 104, etc. The scanner 612 may have an optical character reader (OCR) function as well. The printer 613 prints image data and text data. The printer 613 may be, for example, a laser printer or an ink jet printer.

Further, for example, among the components described above, the estrus notifying apparatus 104 may be configured to omit the optical disk drive 606, the optical disk 607, the display 608, the mouse 611, the scanner 612, and the printer 613. The client apparatus 105 may be configured to omit the optical disk drive 606, the optical disk 607, the mouse 611, the scanner 612, and the printer 613.

### (Example of Information Stored in Communications Device 101)

An example of information stored in the communications device 101 will be described. As described above, the communications device 101 stores the measurement result information table 201. For example, the measurement result information table 201 is implemented by using the memory 302 of the communications device 101.

### <Example of Storage Contents of Measurement Result Information Table 201>

FIG. 7 is an explanatory view of an example of storage contents of the measurement result information table 201. In FIG. 7, the measurement result information table 201 has fields for measurement dates/times and measurement values. By setting information in these fields, records of measurement result information 700-1 to 700-6 are stored for respective combinations of measurement dates/times and measurement values in the measurement result information table 201.

The measurement date/time indicates date and time of transmission timing of past measurement result information. In the case of this embodiment, by way of example, the measurement dates/times indicate dates and times of transmission timings of the measurement result information of the last six times. The measurement value indicates a measurement value of the step count of the livestock animal A at the transmission timing of past measurement result information. In the case of this embodiment, by way of example, the measurement values indicate measurement values of the step counts of the livestock animal A at the transmission timings of the measurement result information of the last six times.

For example, the communications device 101 stores as a current measurement value a value acquired by accumulating the step count of the livestock animal A until the current time from a given timing such as timing of setting the measurement value to "0". Each time the livestock animal A takes one step, acceleration is momentarily generated in the communications device 101. When this acceleration is detected by the sensor 304, the communications device 101 counts up the current measurement value by "+1".

When the transmission timing of the measurement result information arrives based on the time measurement result of the time 305, the communications device 101 stores the measurement result information correlated with the current measurement information at the measurement date/time corresponding to the transmission timing. The transmission timing is on the hour, for example.

In FIG. 7, the measurement result information 700-1 indicates that the measurement value at the time point of "6:00 on February 20, 2012" is "C6 (C6 is a positive integer)". When the measurement result information is stored, the communications device 101 transmits the records of the measurement result information stored in the measurement result information tables 201 via the relay device 102 to the estrus notifying apparatus 104.

Although the communications device 101 stores the measurement result information of the last six times in the described example, configuration is not limited hereto. Configuration may be such that the communications device 101 does not store past measurement result information. For example, in this case, when the transmission timing of the measurement result information arrives, the communications device 101 may transmit the current measurement value as the measurement result information and delete the measurement result information. Such a configuration can reduce a data amount stored by the communications device 101 in terms of the storage of the measurement result information.

Although the communications device 101 transmits the records of the measurement result information stored in the measurement result information tables 201 in this example, configuration is not limited hereto. For example, the communications device 101 may transmit only the current measurement result information, or particularly, only the measurement result information 700-1 in the example of FIG. 7. Such a configuration can reduce a data amount stored by the communications device 101 in terms of the transmission of the measurement result information.

The communications device 101 may transmit the current measurement result information and the measurement result information failed in transmission at past transmission timing. For example, in this case, when receiving the measurement result information from the communications device 101, the relay device 102 transmits successful reception information indicative of reception of the measurement result information to the communications device 101. If the successful reception information is not received within a given period after transmission of the measurement result information, the communications device 101 determines that the transmission of the measurement result information has failed.

In this case, the communications device 101 correlates and stores information indicative of failure of transmission with the measurement result information determined as having failed in transmission. When the transmission timing of the measurement result information subsequently arrives, the communications device 101 transmits the current measurement result information and the measurement result information failed in transmission. Such a configuration can ensure transmission of the measurement result information to the relay device 102 while reducing a data amount transmitted by the communications device 101 in terms of the transmission of the measurement result information.

### (Example of Information Stored by Estrus Notifying Apparatus 104)

An example of information stored by the estrus notifying apparatus 104 will be described. As described above, the estrus notifying apparatus 104 stores the various DBs 202, 203, and 204. The various DBs 202, 203, and 204 are implemented by using a storage unit such as the ROM 602, the RAM 603, the magnetic disk 605, and the optical disk 607 of the estrus notifying apparatus 104.

### <Example of Storage Contents of Step Count DB 202>

FIG. 8 is an explanatory view of an example of storage contents of the step count DB 202. In FIG. 8, the step count DB 202 is stored for each of the communications devices 101 and has a communications device ID for identifying the communications device 101. The step count DB 202 has fields for dates, step counts, and estrus indication flags. By setting information in these fields, records of step-count information 800-1 to 800-3 are stored for respective combinations of dates, step count histories, and estrus indication flags in the step count DB 202.

The date indicates a date, for example, year/month/day, of measurement of the number of steps. The step count indicates the step count of the livestock animal A based on the measurement result information. The field of the step count includes time slot fields such as "0:00-1:00", "1:00-2:00", "2:00-3:00", ..., "22:00-23:00", and "23:00-24:00", for example. Each of the time slot fields stores information indicative of the step count of the livestock animal A during the time slot. For example, the estrus notifying apparatus 104 stores a value acquired by subtracting a measurement value at the starting time from a measurement value at the ending time of each of the time slot fields as the step count of the livestock animal A in the time slot into each of the time slot fields.

For example, it is assumed that the estrus notifying apparatus 104 acquires the measurement result information including information indicating that the measurement value at "2:00 on February 20, 2012" is "C2" and that the immediately preceding measurement value at "1:00 on February 20, 2012" is "C1". In this case, the estrus notifying apparatus 104 stores "N302 (=C2-C1)" acquired by subtracting "C1" from "C2" in the step count field identified by a date of "February 20, 2012" and a time of "two o'clock".

The time slot field includes a relay device ID field storing a relay device ID for identifying the transmission source relay device 102 when the measurement result information is received from the relay device 102 on each of the times. The estrus notifying apparatus 104 stores into the relay device ID field a relay device ID indicative of the relay device 102 that is the transmission source when the measurement result information is received. For example, the estrus notifying apparatus 104 stores the relay device ID "B4" of the relay device 102 that is the transmission source of the measurement result information when the measurement result information is received at "2:00 on February 20, 2012". In FIG. 8, information of "step count" is recorded in a row including N301 and N302 or in a row including N201 and N202, and the relay device IDs are recorded in a row including B4 and B4 or B2 and B2.

The estrus indication flag includes an ON/OFF field capable of storing each flag as "0" indicative of OFF or "1" indicative of ON, for example. The estrus indication flag also includes a flag ON date/time field storing date and time when each flag is set to "1".

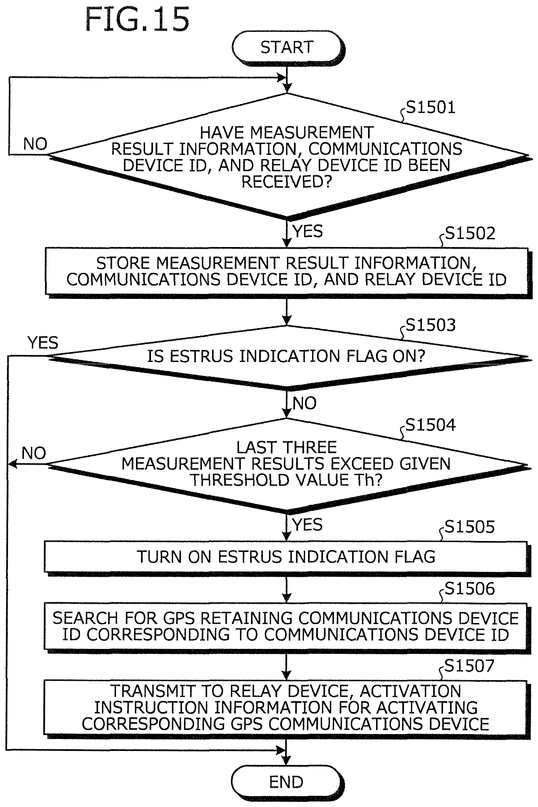

For example, when a given condition is satisfied, the estrus notifying apparatus 104 stores "1" in the ON/OFF field of the estrus indication flag. On the other hand, the estrus notifying apparatus 104 stores "0" when "1" is not stored in the ON/OFF field. The setting of the estrus indication flag will be described later with reference to FIG. 15.

The step count DB 202 stores the records of the information described above for each of the communications devices 101. Each of the communications devices 101 has a communications device ID as a unique identifier and transmits its own communications device ID along with the measurement result information. The estrus notifying apparatus 104 identifies which communications device ID the communications device 101 transmitting the measurement result information has, based on the received communications device ID. The estrus notifying apparatus 104 stores the step-count information based on the received measurement result information into the fields corresponding to the identified communications device 101.

<Example of Storage Contents of Herd Management DB 203>

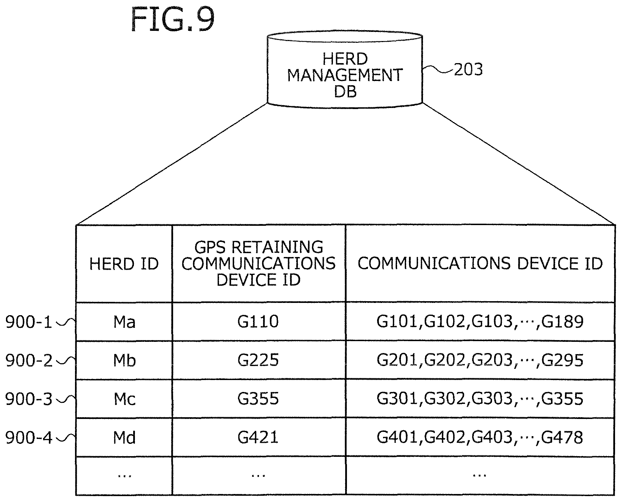

FIG. 9 is an explanatory view of an example of storage contents of the herd management DB 203. In FIG. 9, the herd management DB 203 has fields for herd IDs, GPS retaining communications device IDs, and communications device IDs. By setting information in these fields, records of herd management information 900-1 to 900-4 are stored for respective combinations of herd IDs, GPS retaining communications device IDs, and communications device IDs in the herd management DB 203.

The herd ID indicates an identifier of each herd. The GPS retaining communications device ID is information for identifying the livestock animal An equipped with the GPS communications device 107 and indicates the communications device ID of the livestock animal An equipped with the GPS communications device 107. The communications device ID indicates an identifier of each of the communications devices 101. For example, in FIG. 9, the herd management information 900-1 indicates that in a herd of the herd ID "Ma", the GPS communications device 107 is equipped to the communications device ID "G110" out of the 90 communications devices 101 of the communications device IDs "G101 to G189".

### <Storage Contents of GPS Communications Device DB 204>

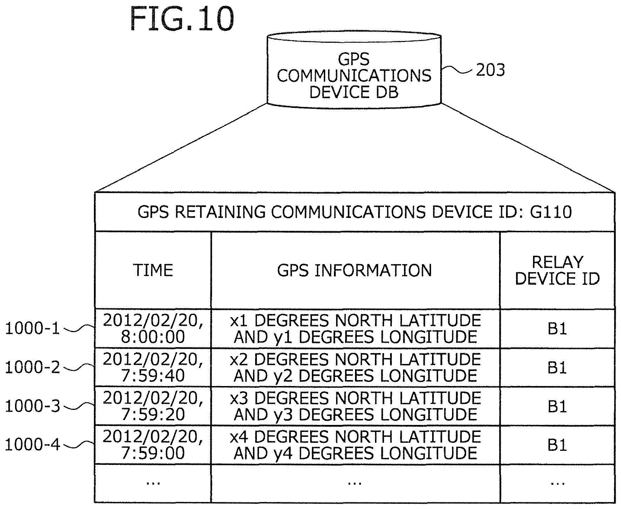

An example of storage contents of the GPS communications device DB 204 will be described. FIG. 10 is an explanatory view of an example of storage contents of the GPS communications device DB 204. In FIG. 10, the GPS communications device DB 204 is stored for each of the communications devices 101 equipped to the given livestock animals An present in herds and stores a GPS retaining communications device ID for identifying the communications device 101 equipped to the livestock animal An.

The GPS communications device DB 204 has fields for times, GPS information, and relay device IDs. By setting information in these fields, records of GPS position information 1000-1 to 1000-4 are stored for respective combinations of times, GPS information, and relay device IDs in the GPS communications device DB 204.

The time indicates the time when GPS information is received. For example, it is assumed that the GPS information is received at intervals of 20 seconds. The reception intervals, i.e., intervals of transmission from the GPS communications device 107, are not limited to 20 seconds and can be set to a minute or an hour. The GPS information is information capable of identifying a point on a map and is information indicative of latitude and longitude or information indicative of coordinates, for example. The relay device ID indicates an identifier of each of the relay devices 102 and indicates the relay device 120 that transmitted to the estrus notifying apparatus 104, the GPS information received from the GPS communications device 107.

For example, in FIG. 10, the GPS position information 1000-1 indicates that the communications device 101 of the communications device ID "G110" is located at the position of "x1 degrees north latitude and y1 degrees longitude" at the time point "2012/02/20, 8:00:00". The GPS position information 1000-1 also indicates that the GPS information is received from the relay device ID "B1".

### (Functional Configuration Example of Estrus Notifying Apparatus 104)

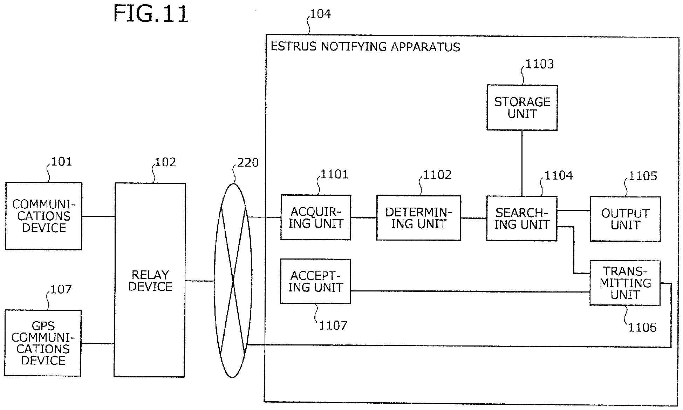

FIG. 11 is a block diagram of a functional configuration example of the estrus notifying apparatus 104. In FIG. 11, the estrus notifying apparatus 104 includes an acquiring unit 1101, a determining unit 1102, a storage unit 1103, a searching unit 1104, an output unit 1105, a transmitting unit 1106, and an accepting unit 1107. The functions acting as a control unit except the storage unit 1103 are implemented by causing the CPU 601 to execute a program stored on the magnetic disk 605 depicted in FIG. 6, for example, or by the I/F 609 and the magnetic disk 605. Processing results of the functional units are stored in the RAM 603, for example.

The acquiring unit 1101 has a function of acquiring measurement result information of each of the livestock animals A. For example, the acquiring unit 1101 acquires the measurement result information of the step counts of the livestock animals A located in a communications area of any of the multiple relay devices 102 disposed at different installation positions. The measurement result information includes information of the communications device IDs for identifying the communications devices 101 equipped to the livestock animals A. The timing of acquisition of the measurement result information by the acquiring unit 1101 is considered as the timing of reception of the measurement result information via the network 220 from the relay device 102. For example, the relay device 102 receives the measurement result information from the communications devices 101 at intervals of one hour and transmits the received measurement result information to the estrus notifying apparatus 104.

In this embodiment, the timing of acquisition of the measurement result information by the acquiring unit 1101 is considered as the timing of reception from the relay device 102 and therefore, the information is acquired at intervals of one hour. This is not a limitation of the timing of acquisition of the measurement result information by the acquiring unit 1101 and, for example, the measurement result information received from the relay device 102 may be stored in a given storage unit for acquisition at a preset timing or arbitrary timing.

The determining unit 1102 has a function of determining whether each of the multiple livestock animals A is in estrus based on the measurement result information acquired by the acquiring unit 1101. For example, the determining unit 1102 determines whether the step count of the livestock animal A satisfies a given condition based on the measurement result information acquired by the acquiring unit 1101, and determines that the livestock animals A is in estrus if the given condition is satisfied.

The given condition can arbitrarily be set depending on an abnormal state such as estrus and disease of the livestock animal A that the worker W desires to find. For example, if it is desired to find a cow in estrus in this embodiment, the given condition is set as the step count of a livestock animal greater than or equal to the given threshold value Th by utilizing the characteristic that estrus increases the step count of a cow. If it is desired to find a livestock animal A with disease, the given condition may be set as the step count of a livestock animal less than a separately determined threshold value by utilizing the characteristic that disease decreases the step count of the livestock animal A.

The given condition may include threshold values set in stages depending on an abnormal state of a livestock animal A the worker W desires to find. For example, the given condition can be set to "Th1 or less" for the case of a disease a, "Th1 to Th2 (Th1<Th2)" for the case of a healthy state, "Th2 to Th3 (Th2<Th3)" for the case of estrus, and "Th3 or more" for the case of appearance of a natural predator. This enables detailed comprehension of a state of the livestock animal A.

The storage unit 1103 has a function of storing information indicating the communications devices 101 equipped to the respective livestock animals forming a herd and a given communications device equipped to any livestock animal An of the livestock animals in a correlated manner. The given communications device has a GPS function of acquiring position information thereof and is the GPS communications device 107, for example. The given communications device has a battery acting as a drive power source, can freely be powered on/off, and is normally powered off.

For example, the storage unit 1103 stores information indicating the GPS communications device 107 equipped to one animal in a herd and the communications devices 101 of the other livestock animals A belonging to the same herd as the livestock animal An equipped with the GPS communications device 107. The storage unit 1103 corresponds to the herd management DB 203 depicted in FIG. 9, for example.

If the determining unit 1102 determines that a given livestock animal An of the multiple livestock animals A is in estrus, the searching unit 1104 searches for a given position information communications device corresponding to the given livestock animal An. The position information communications device is the GPS communications device 107. For example, the searching unit 1104 searches for the given GPS communications device 107 corresponding to the given livestock animal An, based on information of the herd including the given livestock animal An and information related to the GPS communications device 107 capable of outputting position information equipped to any livestock animal A belonging to the herd. The information of the herd including the given livestock animal An is the herd management information 900 including the herd ID and the communications device ID correlated with each other as depicted in FIG. 9, for example. The information related to the GPS communications device 107 is the GPS retaining communications device ID depicted in FIG. 9, for example.

For example, if the determining unit 1102 determines that the given condition is satisfied, the searching unit 1104 refers to the storage unit 1103 to search for the GPS communications device 107 corresponding to the communications device 101. For example, if the determining unit 1102 determines that the step count of the livestock animal A is greater than or equal to the given threshold value Th, the searching unit 1104 refers to the storage unit 1103 to search for the GPS communications device 107 corresponding to the communications device 101. This enables identification of the livestock animal An equipped with the GPS communications device 107 included in the same herd as the livestock animal A in estrus equipped with the communications device 101.

The transmitting unit 1106 has a function of transmitting to the given GPS communications device 107 retrieved by the searching unit 1104, an activation instruction for the function of the given GPS communications device 107 acquiring position information thereof. For example, the transmitting unit 1106 transmits to the GPS communications device 107, an activation instruction for the GPS function included in the GPS communications device 107 retrieved by the searching unit 1104. The transmitting unit 1106 transmits the activation instruction information to the GPS communications device 107 via the network 220 and the relay device 102, for example.

The GPS communications device 107 has a battery acting as a drive power source. The GPS communications device 107 turns on the power source in response to the activation instruction information from the transmitting unit 1106. The GPS communications device 107 acquires GPS information and transmits the GPS information via the relay device 102 to the estrus notifying apparatus 104. If the communications area 103 of the relay device 102 changes as the livestock animal A moves, the GPS communications device 107 transmits the GPS information via the relay device 102 of the changed communications area 103, to the estrus notifying apparatus 104. Since the GPS communications device 107 turns on the power source when the activation instruction information is received as described above, the power consumption of the battery can be suppressed.

If multiple herds are close to each other, the multiple GPS communications devices 107 may be present in the communications area 103 of the same relay device 102. The estrus notifying apparatus 104 preferably transmits an authentication key corresponding to each of the GPS communications devices 107 along with the activation instruction information so as not to activate the multiple GPS communications devices 107 with the activation instruction information from the estrus notifying apparatus 104. In such a configuration, the GPS communications device 107 may be turn on the power source when authentication using the authentication key is successful. As a result, only the targeted GPS communications device 107 is activated.

In another situation, a livestock animal A in estrus equipped with the communications device 101 and a livestock animal An equipped with the GPS communications device 107 making up the same herd may belong to the respectively different communications areas 103 of the relay devices 102 between the communications device 101 and the GPS communications device 107 depending on a positional relationship with the relay devices 102. In particular, for example, the communications device 101 may be located in the communications area 103a while the GPS communications device 107 is located in the communications area 103b.

In such a case, the estrus notifying apparatus 104 transmits the activation instruction information to the relay device 102a of the communications area 103a in which the communications device 101 is located, and the GPS communications device 107 is not activated. In consideration of such a situation, the GPS communications device 107 preferably transmits the successful reception information indicative of completion of activation to the estrus notifying apparatus 104 when the power source is turned on in response to the activation instruction.

In this case, if the successful reception information is not received within a given period after transmission of the activation instruction, the estrus notifying apparatus 104 may determine that the transmission of the activation instruction is failed and may transmit the activation instruction to the other relay device 102b in the vicinity of the relay device 102a to which the activation instruction was previously transmitted. With such a configuration, the GPS communications device 107 can be activated even in a situation when the communications device 101 and the GPS communications device 107 are located in the different communications areas 103 of the relay devices 102.

The output unit 1105 outputs the position information received from the given GPS communications device 107. The output unit 1105 outputs the identification information of the given GPS communications device 107. The identification information of the given GPS communications device 107 may be any information capable of identifying the livestock animal An equipped with the GPS communications device 107 and the identification information in this embodiment is the identification information (communications device ID) of the communications device 101 of the livestock animal An equipped with the GPS communications device 107.

The output unit 1105 outputs the communications device ID of the livestock animal A equipped with the GPS communications device 107 with the power source turned on. The identification information of the given GPS communications device 107 is not limited thereto and may be identification information identifying the GPS communications device 107 itself. The output is by display or transmission. Therefore, the identification information of the GPS communications device 107 output from the output unit 1105 is displayed on the display 608 connected to the estrus notifying apparatus 104 or is transmitted from the I/F 609 to the client apparatus 105 such as a PC or a notebook PC, a portable telephone, and a smartphone.

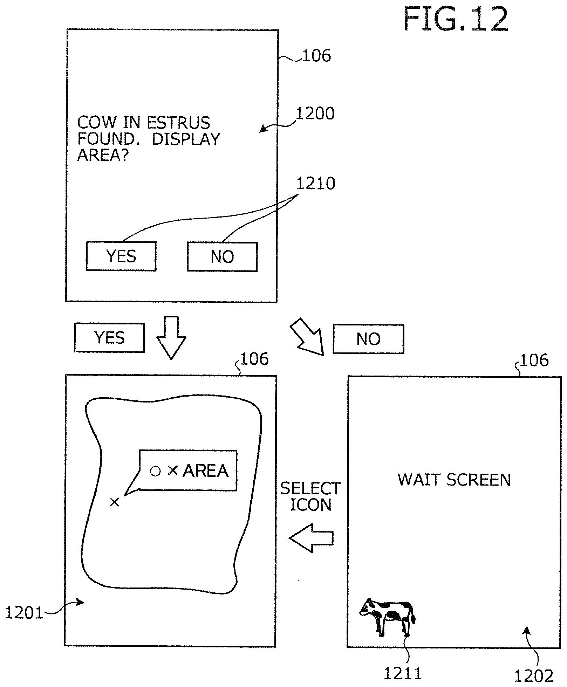

In this embodiment, the GPS information of the GPS communications device 107 is output along with the communications device ID of the livestock animal A equipped with the GPS communications device 107 with the power source turned on. Only the identification information of the GPS communications device 107 may be output and, when a request is received from an input device such as the keyboard 610 and the client apparatus 105, the GPS information may also be output. A screen example at the time of output of the identification information and the GPS information of the GPS communications device 107 to the client apparatus 105 will be described later with reference to FIG. 12.

Since the relay device 102 is passed through when the activation instruction information is transmitted to the GPS communications device 107 in this embodiment, the relay device ID for identifying the relay device 102 is necessary. Therefore, when transmitting the measurement result information to the estrus notifying apparatus 104, the relay device 102 transmits the relay device ID thereof at the same time and, when the acquiring unit 1101 acquires the measurement result information, the acquiring unit 1101 acquires the relay device ID at the same time and records the relay device ID into the step count DB 202.

If the acquiring unit 1101 acquires the measurement result information when some time has elapsed after reception of the measurement result information from the relay device 102, the livestock animal An may have moved to a different communications area 103 at the time of activation instruction. Therefore, the timing of acquisition of the measurement result information by the acquiring unit 1101 is preferably the timing same as, or close to, the timing of reception from the relay device 102.

The accepting unit 1107 accepts a stop request for the GPS function of the given GPS communications device 107. The accepting unit 1107 accepts the stop request from the keyboard 610 and the mouse 611 connected to the estrus notifying apparatus 104 or accepts the stop request from the client apparatus 105 via the I/F 609. The acceptance of the stop request is not limited to the input from the worker W. For example, the GPS function of the client apparatus 105 may be utilized such that when the client apparatus 105 is located near the activated GPS communications device 107, the stop request is automatically accepted based on the assumption that the livestock animal A in estrus is found.

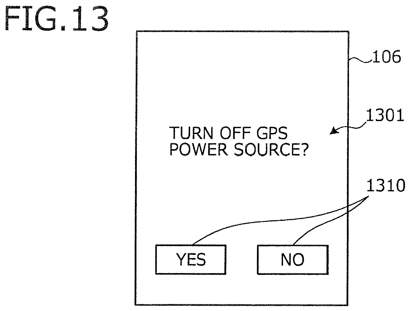

When the client apparatus 105 is located near the activated GPS communications device 107, the client apparatus 105 may be notified of whether the stop request is made, and the stop request may be accepted in response to the input from the worker W. A screen example at the time of acceptance of the stop request displayed on the client apparatus 105 will be described later with reference to FIG. 13.

When the accepting unit 1107 accepts the stop request, the transmitting unit 1106 transmits stop instruction information of the GPS function to the given GPS communications device 107. The stop instruction information may forcibly be transmitted in terms of suppression of power consumption of the battery not only when the accepting unit 1107 accepts the stop request but also when a given period such as several days corresponding to an estrus period has elapsed, for example. As a result, for example, even when the worker W forgets to make the stop request, the power source of the GPS communications device 107 can be turned off.

The GPS communications device 107 turns off the power source in response to the stop instruction information from the transmitting unit 1106. As described above, since the GPS communications device 107 turns off the power source when the stop instruction information is received, power consumption of the battery can be suppressed. For example, if a given period such at several days corresponding to an estrus period has elapsed without reception of the stop request information, the GPS communications device 107 may forcibly be turn off the power source in terms of suppression of power consumption of the battery. As a result, for example, even when the worker W forgets to make the stop request, the power source of the GPS communications device 107 can be turned off.

As in the case of transmission of the activation instruction information, the estrus notifying apparatus 104 may transmit an authentication key corresponding to each of the GPS communications devices 107 along with the stop instruction information in terms of improvement in certainty at the time of transmission. The GPS communications device 107 may be powered off when authentication using the authentication key is successful. If the GPS communications device 107 receives the stop instruction information, successful reception information may be transmitted to the estrus notifying apparatus 104 and, if the estrus notifying apparatus 104 does not receive the successful reception information, the stop instruction information may be transmitted again after changing the relay device 102 defined as the transmission destination.

Although the transmitting unit 1106 transmits the activation/stop instruction information via the relay device 102 to the GPS communications device 107 in this embodiment, the transmitting unit 1106 can transmit the activation/stop instruction information only through the network 220 without the relay device 102. In this case, for example, the transmitting unit 1106 may transmit information identifying the GPS communications device 107 to be activated/stopped, such as an authentication key, along with the activation/stop instruction information, and the GPS communications device 107 may activate/stop the power source when authentication is successful.

With such a configuration, the estrus notifying apparatus 104 does not need to identify the relay device 102, i.e., does not need to acquire and store the relay device ID. When the activation/stop instruction is given, even if the livestock animal An equipped with the GPS communications device 107 is not present in the communications area 103 of the relay device 102 that is the transmission source of the measurement result information, the activation instruction can be given regardless of the communications area 103. Such a configuration also enables direct transmission of the stop instruction information from the client apparatus 105 to the GPS communications device 107.

The GPS information can also be transmitted from the GPS communications device 107 through the network 220 alone without the relay device 102 to the estrus notifying apparatus 104. With such a configuration, the estrus notifying apparatus 104, the client apparatus 105, and the GPS communications device 107 can respectively transmit and receive records of information regardless of the communications area 103, i.e., without identifying the relay device 102.

In this embodiment, only one of the livestock animals A forming a herd is equipped with the GPS communications device 107. Therefore, the initial cost can be suppressed.

The GPS communications devices 107 may be equipped to multiple animals of the livestock animals A forming a herd, or the GPS communications devices 107 may be equipped to all the livestock animals. If the GPS communications devices 107 are equipped to all the livestock animals, the estrus notifying apparatus 104 may transmit the activation instruction to the GPS communications device 107 of the livestock animal A determined as being in estrus. Even with such a configuration, the power source of the GPS communications device 107 can normally be powered off and can be powered on when the activation instruction is given and therefore, the power consumption of the battery can be suppressed.

### (Screen Examples Displayed on Client Apparatus 105)

Screen examples displayed on the client apparatus 105 will be described.

### <Screen Example 1>

FIG. 12 is an explanatory view (part one) of an example of a screen displayed on the client apparatus 105. In FIG. 12, the display 106 displays a notification screen 1200 indicating that a livestock animal A (cow) in estrus is found and whether the position of the livestock animal A in estrus is to be displayed. The notification screen 1200 displays selection buttons 1210 for allowing the worker W to select whether the position of the livestock animal A in estrus is to be displayed. By displaying the notification screen 1200, the position of the livestock animal A can be displayed according to selection by the worker W when the worker W wants to know the position of the livestock animal A in estrus.

If the worker W selects "YES" out of the selection buttons 1210, a map screen 1201 indicative of the position of the livestock animal A in estrus is displayed. The map screen 1201 displays a position of the herd to which the livestock animal A in estrus belongs, or particularly, a position of the livestock animal An equipped with the GPS communications device 107. If the worker W goes to a "ox area", relying on the map screen 1201, the worker W can confirm the herd to which the livestock animal A in estrus belongs. The worker W knows that the livestock animal A in estrus is present in this herd, and therefore can easily find the livestock animal A in estrus out of the herd.

If the worker W selects "NO" out of the selection buttons 1210, a wait screen 1202 is displayed. The wait screen 1202 displays an icon 1211. The icon display can give indication of the unconfirmed livestock animal A in estrus to the worker W and can prevent the worker W from forgetting to go to the location of the livestock animal A.

If the worker W selects the icon 1211 on the wait screen 1202, the map screen 1201 is displayed. When the worker W selects the icon 1211, a request for the position information of the GPS communications device 107 is made to the estrus notifying apparatus 104, and the current position information of the GPS communications device 107 is reflected on the map screen 1201. As a result, when the worker W wants to know the position of the livestock animal A in estrus, the current position of the livestock animal A can be displayed according to the selection of the worker W.

### <Screen Example 2>

FIG. 13 is an explanatory view (part two) of an example of a screen displayed on the client apparatus 105. In FIG. 13, the display 106 displays a notification screen 1301 indicative of whether the power source of the GPS communications device 107 is turned off. The notification screen 1301 is displayed after the map screen 1201 of FIG. 12 is displayed. For example, the notification screen 1301 may be displayed immediately after the map screen 1201 is displayed or may be selectively displayable when the icon 1211 of FIG. 12 is selected.

Alternatively, the notification screen 1301 may be displayed by using the GPS function of the client apparatus 105 when the client apparatus 105 comes close to, for example, within 50 m from, the herd of the livestock animal A in estrus. If the worker W selects "YES" out of selection buttons 1310 on the notification screen 1301, the stop instruction information is transmitted via the estrus notifying apparatus 104 to the GPS communications device 107. On the other hand, if the worker W selects "NO" out of the selection buttons 1310 on the notification screen 1301, the stop instruction information is not transmitted. As described above, since the notification of turning-off of the GPS power source can prompt the turning-off of the GPS power source, the power consumption of the battery of the GPS communications device 107 can be suppressed.

### (Estrus Notifying Process Procedure of Relay Device 102)

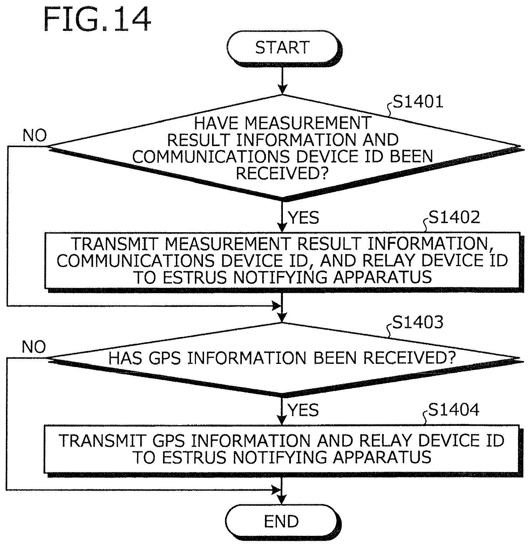

An estrus notifying process procedure of the relay device 102 will be described. FIG. 14 is a flowchart of an example of the estrus notifying process procedure of the relay device 102. In the flowchart of FIG. 14, the relay device 102 determines whether the measurement result information, i.e., a step count result of the livestock animal A, and the communications device ID of the communications device 101 have been received from the communications device 101 (step S1401). The measurement result information and the communications device ID are transmitted from the communications device 101 at intervals of one hour, for example.

If the measurement result information and the communications device ID have not been received (step S1401: NO), the relay device 102 transitions to the operation at step S1403. If the measurement result information and the communications device ID have been received (step S1401: YES), the relay device 102 transmits the received measurement result information and communications device ID as well as the relay device ID thereof to the estrus notifying apparatus 104 (step S1402).

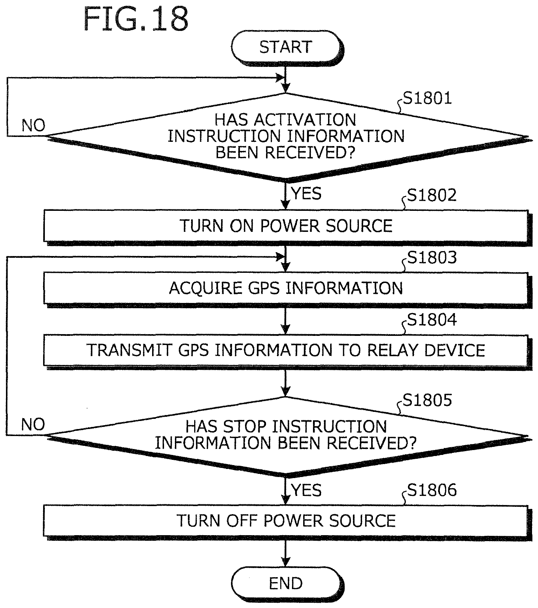

The relay device 102 determines whether the GPS information has been received from the GPS communications device 107 (step S1403). Since the power source of the GPS communications device 107 is normally off, the GPS information is received after activation of the GPS communications device 107. The activation of the GPS communications device 107 will be described later with reference to FIG. 18. The GPS information is transmitted from the GPS communications device 107 at given time intervals (e.g., every 20 seconds).

If the GPS information has not been received at step S1403 (step S1403: NO), a series of operations of this flowchart is terminated. If the GPS information has been received (step S1403: YES), the relay device 102 transmits the GPS information and the relay device ID thereof to the estrus notifying apparatus 104 (step S1404) and terminates a series of operations of this flowchart.

As described above, when receiving various records of information such as the measurement result information, the communications device ID, and the GPS information, the relay device 102 can transmit the information along with its own relay device ID to the estrus notifying apparatus 104.

### (Estrus notifying process Procedure of Estrus Notifying Apparatus 104)

An estrus notifying process procedure of the estrus notifying apparatus 104 will be described. FIG. 15 is a flowchart (part one) of an example of the estrus notifying process procedure of the estrus notifying apparatus 104. In the flowchart of FIG. 15, the estrus notifying apparatus 104 first determines whether the measurement result information, the communications device ID, and the relay device ID have been received from the relay device 102 (step S1501). At step S1501, the estrus notifying apparatus 104 waits until the measurement result information, the communications device ID, and the relay device ID have been received (step S1501: NO).

If the measurement result information, the communications device ID, and the relay device ID have been received (step S1501: YES), the estrus notifying apparatus 104 stores the measurement result information, the communications device ID, and the relay device ID into the step count DB 202 (see FIG. 8) (step S1502). The estrus notifying apparatus 104 refers to the step count DB 202 to determine whether the estrus indication flag indicative of the presence of an indication of estrus in the livestock animal A corresponding to the communications device ID is ON (step S1503).

If the estrus indication flag is ON (step S1503: YES), i.e., if it is determined that the livestock animal A corresponding to the communications device ID shows indication of estrus, a series of operations of this flowchart is terminated. If the estrus indication flag is OFF at step S1503 (step S1503: NO), the estrus notifying apparatus 104 determines whether the last three measurement results stored in the step count DB 202 exceed the given threshold value Th (step S1504).

If the last three measurement results do not exceed the given threshold value Th (step S1504: NO), a series of operations of this flowchart is terminated. If the last three measurement results exceed the given threshold value Th (step S1504: YES), the estrus notifying apparatus 104 considers that the livestock animal A is in estrus, and turns on the estrus indication flag of the step count DB 202 (step S1505). The estrus notifying apparatus 104 refers to the herd management DB 203 (see FIG. 9) and searches for the GPS retaining communications device ID corresponding to the communications device ID (step S1506).

The GPS retaining communications device ID is information for identifying the livestock animal An equipped with the GPS communications device 107 and corresponds to the communications device ID of the livestock animal An equipped with the GPS communications device 107. For example, the operation at step S1506 corresponds to identifying the livestock animal An equipped with the GPS communications device 107 in the same herd with the livestock animal A showing indication of estrus.

After step S1506, the estrus notifying apparatus 104 transmits the activation instruction information for activating the corresponding GPS communications device 107 to the relay device 102 (step S1507) and terminates a series of operations of this flowchart. As a result, the GPS communications device 107 can be activated when the livestock animal A shows indication of estrus.

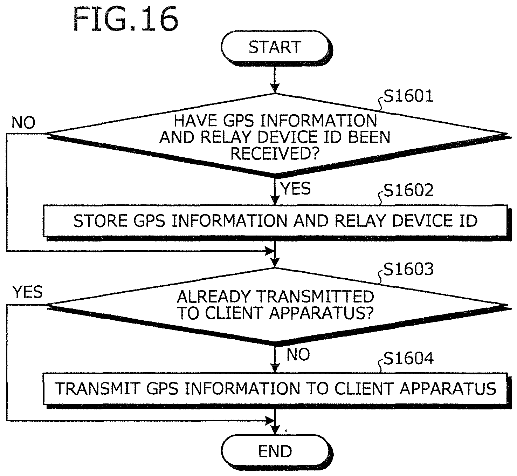

FIG. 16 is a flowchart (part two) of an example of the estrus notifying process procedure of the estrus notifying apparatus 104. In the flowchart of FIG. 16, the estrus notifying apparatus 104 determines whether the GPS information of the GPS communications device 107 and the relay device ID have been received from the relay device 102 (step S1601). If the GPS information and the relay device ID are not received (step S1601: NO), the estrus notifying apparatus 104 transitions to step S1603.

If the GPS information and the relay device ID have been received (step S1601: YES), the estrus notifying apparatus 104 stores the GPS information and the relay device ID into the GPS communications device DB 204 (see FIG. 10) (step S1602). This enables management of the position of the GPS communications device 107 and the relay device 102 of the communications area 103 in which the GPS communications device 107 is located.

The estrus notifying apparatus 104 determines whether the GPS information has already been transmitted to the client apparatus 105 (step S1603). If the GPS information has already been transmitted to the client apparatus 105 (step S1603: YES), a series of operations of this flowchart is terminated.

If the GPS information has not yet been transmitted to the client apparatus 105 (step S1603: NO), the estrus notifying apparatus 104 transmits the GPS information to the client apparatus 105 (step S1604) and terminates a series of operations of this flowchart. This enables the client apparatus 105 to display the GPS information.

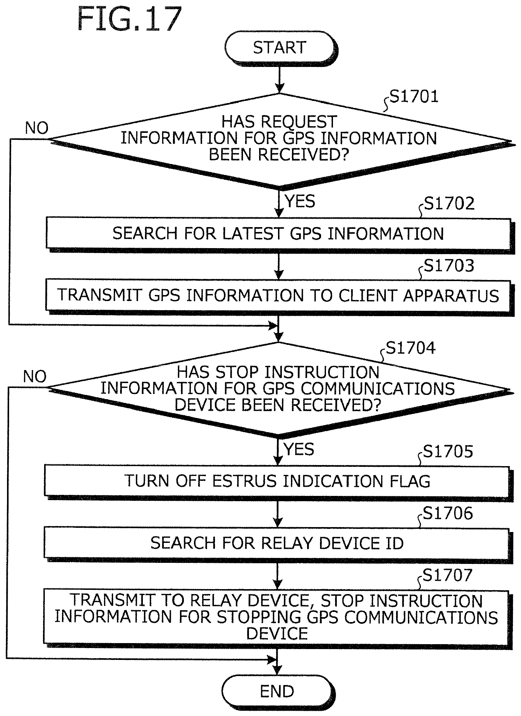

FIG. 17 is a flowchart (part three) of an example of the estrus notifying process procedure of the estrus notifying apparatus 104. In the flowchart of FIG. 17, the estrus notifying apparatus 104 determines whether request information of the GPS information has been received from the client apparatus 105 (step S1701). A case of receiving the request information of the GPS information corresponds to, for example, a case where the worker W wants to confirm the GPS information again since the worker W could not go to the livestock animal A in estrus when the GPS information of the livestock animal A in estrus was transmitted to the client apparatus 105 at least once.

If the request information of the GPS information has not been received (step S1701: NO), the estrus notifying apparatus 104 transitions to the operation at step S1704. If the request information of the GPS information has been received (step S1701: YES), the estrus notifying apparatus 104 refers to the GPS communications device DB 204 (see FIG. 10) and searches for the latest GPS information (step S1702).

At step S1702, for example, the GPS information of the latest GPS position information 1000-1 is extracted. The estrus notifying apparatus 104 transmits the GPS information to the client apparatus 105 (step S1703). This enables the client apparatus 105 to display the GPS information.

The estrus notifying apparatus 104 then determines whether the stop instruction information of the GPS communications device 107 has been received from the client apparatus 105 (step S1704). If the stop instruction information has not been received (step S1704: NO), a series of operations of this flowchart is terminated. If the stop instruction information has been received (step S1704: YES), the estrus notifying apparatus 104 turns off the estrus indication flag stored in the step count DB 202 (see FIG. 8) (step S1705).

The estrus notifying apparatus 104 refers to the GPS communications device DB 204 (see FIG. 10) and searches for the relay device ID of the communications area 103 in which the GPS communications device 107 is located (step S1706). At step S1706, for example, the relay device ID of the latest GPS position information 1000-1 is extracted.

The estrus notifying apparatus 104 transmits the stop instruction information for stopping the GPS communications device 107 to the relay device 102 of the retrieved relay device ID (step S1707) and terminates a series of operations of this flowchart. This enables the GPS communications device 107 to turn off the power source.

If the request information of the GPS information has been received at step S1701, a transmission request for current position information may be made to the GPS communications device 107. For example, the estrus notifying apparatus 104 refers to the GPS communications device DB 204 (see FIG. 10) and makes a transmission request to the relay device 102 of the communications area 103 in which the GPS communications device 107 is located. In response to this transmission request, the GPS communications device 107 may transmit the GPS information via the relay device 102 to the estrus notifying apparatus 104. As a result, the real-time GPS information can be output.

### (Estrus Notifying Process Procedure of GPS Communications Device 107)

An estrus notifying process procedure of the GPS communications device 107 will be described. FIG. 18 is a flowchart of an example of the estrus notifying process procedure of the GPS communications device 107. In the flowchart of FIG. 18, the GPS communications device 107 determines whether the activation instruction information has been received from the estrus notifying apparatus 104 (step S1801). At step S1801, the GPS communications device 107 waits until the activation instruction information has been received (step S1801: NO).

If the activation instruction information has been received (step S1801: YES), the GPS communications device 107 turns on the power source of the GPS communications device 107 (step S1802). The GPS communications device 107 receives signals from GPS satellites to acquire GPS information (step S1803) and transmits the acquired GPS information to the relay device 102 (step S1804).

The GPS communications device 107 then determines whether the stop instruction information has been received (step S1805). If the stop instruction information has not been received (step S1805: NO), the GPS communications device 107 returns to step S1803. The GPS information is transmitted to the relay device 102 at intervals of 20 seconds, for example. If the stop instruction information has been received at step S1805 (step S1805: YES), the GPS communications device 107 turns off the power source of the GPS communications device 107 (step S1806) and terminates a series of operations of this flowchart.

As a result, the GPS communications device 107 can be activated depending on an instruction from the estrus notifying apparatus 104 and therefore, the GPS communications device 107 can be activated only when the livestock animal A shows indication of estrus. The GPS communications device 107 can be stopped depending on an instruction from the estrus notifying apparatus 104. Therefore, the power consumption of the battery of the GPS communications device 107 can be suppressed.

### (Estrus Notifying Process Procedure of Client Apparatus 105)

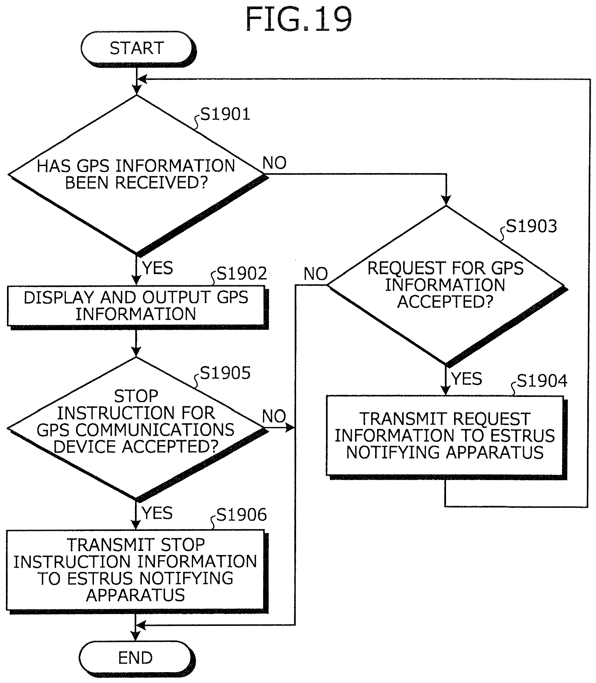

An estrus notifying process procedure of the client apparatus 105 will be described. FIG. 19 is a flowchart of an example of the estrus notifying process procedure of the client apparatus 105. In the flowchart of FIG. 19, the client apparatus 105 determines whether the GPS information has been received from the estrus notifying apparatus 104 (step S1901).

If the GPS information has been received (step S1901: YES), the client apparatus 105 displays and outputs the GPS information (step S1902). At step S1902, the client apparatus 105 displays that the livestock animal A in estrus is found as in the notification screen 1200 depicted in FIG. 12, or displays the position of the livestock animal A in estrus as in the map screen 1201.

If the GPS information has not been received at step S1901 (step S1901: NO), the client apparatus 105 determines whether a request for the GPS information has been received from the worker W (step S1903). The request for the GPS information is received on the wait screen 1202 of FIG. 12, for example. If no request for the GPS information has been received (step S1903: NO), a series of operations of this flowchart is terminated.

If a request for the GPS information has been received (step S1903: YES), the client apparatus 105 transmits the request information to the estrus notifying apparatus 104 (step S1904) and returns to step S1901. The transmission of the request information enables reception of the latest GPS information from the estrus notifying apparatus 104.

After step S1902, the client apparatus 105 determines whether a stop instruction for the GPS communications device 107 has been accepted (step S1905). A stop instruction for the GPS communications device 107 is received on the notification screen 1301 of FIG. 13, for example.

If no stop instruction for the GPS communications device 107 has been accepted at step S1905 (step S1905: NO), a series of operations of this flowchart is terminated. If a stop instruction for the GPS communications device 107 has been accepted (step S1905: YES), the client apparatus 105 transmits the stop instruction information to the estrus notifying apparatus 104 (step S1906) and terminates a series of operations of this flowchart. As a result, after the worker W confirms a location of the livestock animal A in estrus on the display 106, the power source of the GPS communications device 107 can be stopped.

As described above, according to the estrus notifying apparatus 104 of the embodiment, if a livestock animal A in an abnormal state is present in a herd, the GPS communications device 107 equipped to the given livestock animal An in the herd can be activated. As a result, power consumption of the battery of the GPS communications device 107 can be suppressed and therefore, a replacement cycle of the battery can be made longer. Thus, the efforts of replacing the battery of the GPS communications device 107 or replacing the GPS communications device 107 itself can be reduced, which enables reduction in workload required for tracking livestock animals.

According to the estrus notifying apparatus 104 of the embodiment, if a livestock animal A showing indication of estrus is present in a herd, the GPS communications device 107 equipped to the given livestock animal An in the herd can be activated. This enables reduction in workload required for tracking the livestock animal A showing indication of estrus.

According to the estrus notifying apparatus 104 of the embodiment, if a stop request for the GPS communications device 107 is received, the GPS communications device 107 can be stopped. Therefore, the power consumption of the battery of the GPS communications device 107 can further be suppressed.

The client apparatus 105 and the communications device ID may be correlated with each other and, if a livestock animal A in an abnormal state is present, the client apparatus 105 correlated with the communications device ID of the livestock animal A may be notified of the livestock animal A being in the abnormal state. In the case of joint management in which respective livestock animals A have different workers W even in the same farm F, only the worker W managing a livestock animal A in an abnormal state can be notified of the presence of an abnormality in the livestock animal A.

The estrus notifying method described in the present embodiment may be implemented by executing a prepared program on a computer such as a personal computer and a workstation. The program is stored on a computer-readable recording medium such as a hard disk, a flexible disk, a CD-ROM, an MO, and a DVD, read out from the computer-readable medium, and executed by the computer. The program may be distributed through a network such as the Internet.

### EXPLANATIONS OF LETTERS OR NUMERALS

- 101: communications device
- 102: relay device
- 104: estrus notifying apparatus
- 105: client apparatus
- 202: step count DB
- 203: herd management DB
- 204: CPS communications device DB
- 1101: acquiring unit
- 1102: storage unit
- 1104: determining unit
- 1105: output unit
- 1106: transmitting unit
- 1107: accepting unit

## Claims

1. An estrus notifying method executed by a computer that determines estrus based on a step-count measurement result from a step-count measuring device equipped to each of a plurality of livestock animals each belonging to a herd, the estrus notifying method comprising:
acquiring the step-count measurement result of each of the plurality of livestock animals;
determining, for each of the plurality of livestock animals, whether the acquired step-count measurement result of the livestock animal satisfies a given condition, and determining that the livestock animal is in estrus if the given condition is satisfied;
searching for a given position information communications device upon determining that a given livestock animal is in estrus among the plurality of livestock animals, the given position information communications device corresponding to the given livestock animal, and the searching being based on information of the herd to which the given livestock animal belongs and information on a position information communications device that is capable of outputting position information and equipped to any among the plurality of livestock animals belonging to the herd;
transmitting to the given position information communications device, an activation instruction for a function of the given position information communications device, the function being for acquiring position information of the given position information communications device; and
outputting the position information received from the given position information communications device.

2. The estrus notifying method according to claim 1, further comprising:
accepting a stop request for the function of the given position information communications device; and
transmitting a stop instruction for the function of the given position information communications device upon accepting the stop request.

3. An estrus notifying apparatus (104) that determines estrus based on a step-count measurement result from step-count measuring device equipped to each of a plurality of livestock animals each belonging to a herd, the estrus notifying apparatus (104) comprising:
an acquiring unit (1101) that is configured to acquire the step-count measurement result for each of the plurality of livestock animals;
a determining unit (1102) that is configured to determine, for each of the plurality of livestock animals, whether the acquired step-count measurement result of the livestock animal satisfies a given condition, and determining that the livestock animal is in estrus if the given condition is satisfied;
a searching unit (1104) that is configured to search for a given position information communications device, if the determining unit (1102) determines that a given livestock animal is in estrus among the plurality of livestock animals, the given position information communications device corresponding to the given livestock animal, and the searching unit (1104) being configured to perform searching based on information of the herd to which the given livestock animal belongs and information on a position information communications device capable of outputting position information equipped to any among the plurality of livestock animals belonging to the herd;
a transmitting unit (1106) that is configured to transmit to the given position information communications device retrieved by the searching unit (1104), an activation instruction for a function of the given position information communications device, the function being for acquiring position information of the given position information communications device; and
an output unit (1107) that is configured to output the position information received from the given position information communications device.

4. The estrus notifying apparatus (104) according to claim 3, further comprising
an accepting unit (1107) that accepts a stop request for the function of the given position information communications device, wherein
the transmitting unit (1106) transmits a stop instruction for the function of the given position information communications device if the accepting unit (1107) accepts the stop request.

5. An estrus notifying program executed by a computer that determines estrus based on a step-count measurement result from a step-count measuring device equipped to each of a plurality of livestock animals each belonging to a herd, the estrus notifying program causing the computer to execute a process comprising:
acquiring the step-count measurement result of each of the plurality of livestock animals;
determining, for each of the plurality of livestock animals, whether the acquired step-count measurement result of the livestock animal satisfies a given condition, and determining that the livestock animal is in estrus if the given condition is satisfied;
searching for a given position information communications device upon determining that a given livestock animal is in estrus among the plurality of livestock animals, the given position information communications device corresponding to the given livestock animal, and the searching being based on information of the herd to which the given livestock animal belongs and information on a position information communications device that is capable of outputting position information and equipped to any among the plurality of livestock animals belonging to the herd;
transmitting to the given position information communications device, an activation instruction for a function of the given position information communications device, the function being for acquiring position information of the given position information communications device; and
outputting the position information received from the given position information communications device.

## Patentansprüche

1. Östrus (Brunst)-Benachrichtigungsverfahren, das von einem Computer ausgeführt wird und auf der Grundlage eines Ergebnisses einer Schrittzahlmessung aus einer Schrittzahlmessvorrichtung, mit der jedes von mehreren Tieren aus einem Viehbestand, die zu der Herde gehören, ausgerüstet ist, den Östrus bestimmt, wobei das Östrus-Benachrichtigungsverfahren Folgendes umfasst:
Erfassen des Ergebnisses der Schrittzahlmessung von jedem der mehreren Tiere aus dem Viehbestand;
Bestimmen für jedes der mehreren Tiere aus dem Viehbestand, ob das erfasste Schrittzahlmessergebnis des Tieres aus dem Viehbestand eine gegebene Bedingung erfüllt, und Bestimmen, dass sich das Tier aus dem Viehbestand im Östrus (im paarungsbereiten Zustand) befindet, wenn die gegebene Bedingung erfüllt ist;
Suchen nach einer gegebenen Kommunikationsvorrichtung von Positionsinformationen zum Bestimmen, dass sich unter den mehreren Tiere aus dem Viehbestand ein gegebenes Tier aus dem Viehbestand im Östrus befindet, wobei die gegebene Kommunikationsvorrichtung von Positionsinformationen dem gegebenen Tier aus dem Viehbestand entspricht, und wobei das Suchen auf der Grundlage von Informationen der Herde, zu der das gegebene Tier aus dem Viehbestand gehört, und auf Informationen einer Kommunikationsvorrichtung von Positionsinformationen beruht, die in der Lage ist, Positionsinformationen auszugeben, und mit der jedes von den mehreren Tieren aus dem Viehbestand, die zu der Herde gehören,
ausgerüstet ist;
Übertragen einer Aktivierungsanweisung für eine Funktion der gegebenen Kommunikationsvorrichtung von Positionsinformationen an die gegebene Kommunikationsvorrichtung von Positionsinformationen, wobei die Funktion darin besteht, Positionsinformationen der gegebenen Kommunikationsvorrichtung von Positionsinformationen zu erfassen; und
Ausgeben der Positionsinformationen, die von der gegebenen Vorrichtung von Positionsinformationen erhalten werden.

2. Östrus-Benachrichtigungsverfahren nach Anspruch 1, das ferner Folgendes umfasst:
Annehmen einer Stoppanfrage nach der Funktion der gegebenen Kommunikationsvorrichtung von Positionsinformationen; und
Übertragen einer Stoppanweisung für die Funktion der gegebenen Kommunikationsvorrichtung von Positionsinformationen zum Annehmen der Stoppanfrage.

3. Östrus-Benachrichtigungsvorrichtung (104), das den Östrus auf der Grundlage eines Schrittzahlmessergebnisses aus einer Schrittzahlmessvorrichtung bestimmt, mit der jedes der mehreren Tiere aus dem Viehbestand, von denen jedes zu einer Herde gehört, ausgestattet ist, wobei die Östrus-Benachrichtigungsvorrichtung (104) umfasst:
eine Erfassungseinheit (1101), die konfiguriert ist, um das Schrittzahlmessergebnis von jedem der mehreren Tiere aus dem Viehbestand zu erfassen;
eine Bestimmungseinheit (1102), die konfiguriert ist, um für jedes der mehreren Tiere aus dem Viehbestand zu bestimmen, ob das erfasste Schrittzahlmessergebnis der Tiere aus dem Viehbestand einer gegebenen Bedingung genügt, und um zu bestimmen, dass sich das Tier aus dem Viehbestand im Östrus-Zustand befindet, wenn die gegebene Bedingung erfüllt ist;
eine Sucheinheit (1104), die konfiguriert ist, um nach einer gegebenen Kommunikationsvorrichtung von Positionsinformationen zu suchen, wenn die Bestimmungseinheit (1102) bestimmt, dass sich ein gegebenes Tier aus dem Viehbestand von den mehreren Tieren aus dem Viehbestand im Östrus befindet, wobei die gegebene Kommunikationsvorrichtung von Positionsinformationen dem gegebenen Tier aus dem Viehbestand entspricht, und wobei die Sucheinheit (1104) konfiguriert ist, um eine Suche auf der Grundlage von Informationen der Herde, zu der das gegebene Tier aus dem Viehbestand gehört, und auf der Grundlage von Informationen einer Kommunikationsvorrichtung von Positionsinformationen durchzuführen, die in der Lage ist, Positionsinformationen auszugeben, und mit der jedes von den mehreren Tieren aus dem Viehbestand, die zu der Herde gehören, ausgerüstet ist;
eine Übertragungseinheit (1106), die konfiguriert ist, um an die gegebene Kommunikationsvorrichtung von Positionsinformationen, die von der Sucheinheit (1104) abgerufen wird, eine Aktivierungsanweisung für eine Funktion der gegebenen Kommunikationsvorrichtung von Positionsinformationen zu übertragen, wobei die Funktion darin besteht, Positionsinformationen der gegebenen Kommunikationsvorrichtung von Positionsinformationen zu erfassen; und
eine Ausgabeeinheit (1107), die konfiguriert ist, um die Positionsinformationen, die aus der gegebenen Kommunikationsvorrichtung von Positionsinformationen erhalten worden sind, auszugeben.

4. Östrus-Benachrichtigungsvorrichtung (104) nach Anspruch 3, die ferner Folgendes umfasst:
eine Annahmeeinheit (1107), die eine Stoppanfrage nach der Funktion der gegebenen Kommunikationsvorrichtung von Positionsinformationen annimmt, wobei die Übertragungseinheit (1106) eine Stoppanweisung für die Funktion der gegebenen Kommunikationsvorrichtung von Positionsinformationen überträgt, wenn die Annahmeeinheit (1107) die Stoppanfrage annimmt.

5. Östrus-Benachrichtigungsprogramm, das von einem Computer ausgeführt wird und den Östrus auf der Grundlage eines Schrittzahlmessergebnisses aus einer Schrittzahlmessvorrichtung bestimmt, mit der jedes der mehreren Tiere aus dem Viehbestand, von denen jedes zu einer Herde gehört, ausgestattet ist, wobei das Östrus- Benachrichtigungsprogramm den Computer veranlasst, einen Prozess auszuführen, der umfasst:
Erfassen des Schrittzahlmessergebnisses von jedem der mehreren Tiere aus dem Viehbestand;
Bestimmen für jedes der mehreren Tiere aus dem Viehbestand, ob das erfasste Schrittzahlmessergebnis der Tiere aus dem Viehbestand einer gegebenen Bedingung genügt, und Bestimmen, dass sich das Tier aus dem Viehbestand im Östrus-Zustand befindet, wenn die gegebene Bedingung erfüllt ist;
Suchen nach einer gegebenen Kommunikationsvorrichtung von Positionsinformationen zum Bestimmen, dass sich ein gegebenes Tier aus dem Viehbestand von den mehreren Tieren aus dem Viehbestand im Östrus befindet, wobei die gegebene Kommunikationsvorrichtung von Positionsinformationen dem gegebenen Tier aus dem Viehbestand entspricht, und wobei das Suchen auf der Grundlage von Informationen der Herde, zu der das gegebene Tier aus dem Viehbestand gehört, und auf der Grundlage von Informationen einer Kommunikationsvorrichtung von Positionsinformationen beruht, die in der Lage ist, Positionsinformationen auszugeben, und mit der jedes von den mehreren Tieren aus dem Viehbestand, die zu der Herde gehören, ausgerüstet ist;
Übertragen einer Aktivierungsanweisung für eine Funktion der gegebenen Kommunikationsvorrichtung von Positionsinformationen an die gegebene Kommunikationsvorrichtung von Positionsinformationen, wobei die Funktion darin besteht, Positionsinformationen der gegebenen Kommunikationsvorrichtung von Positionsinformationen zu erfassen; und
Ausgeben der Positionsinformationen, die aus der gegebenen Kommunikationsvorrichtung von Positionsinformationen erhalten worden sind.

## Revendications

1. Procédé de notification d'oestrus exécuté par un ordinateur qui détermine l'oestrus sur la base d'un résultat de mesure de comptage de pas provenant d'un dispositif de mesure de comptage de pas équipant chaque animal d'une pluralité d'animaux d'élevage qui appartiennent chacun à un troupeau, le procédé de notification d'oestrus comprenant les étapes ci-dessous consistant à :
acquérir le résultat de mesure de comptage de pas de chaque animal de la pluralité d'animaux d'élevage ;
déterminer, pour chaque animal de la pluralité d'animaux d'élevage, si le résultat de mesure de comptage de pas acquis de l'animal d'élevage satisfait une condition donnée, et déterminer que l'animal d'élevage est en oestrus si la condition donnée est satisfaite ;
rechercher un dispositif de communication d'informations de position donné, dès lors qu'il a été déterminé qu'un animal d'élevage donné est en oestrus parmi la pluralité d'animaux d'élevage, le dispositif de communication d'informations de position donné correspondant à l'animal d'élevage donné, et l'étape de recherche étant basée sur des informations du troupeau auquel appartient l'animal d'élevage donné et sur des informations d'un dispositif de communication d'informations de position qui est en mesure de fournir en sortie des informations de position et qui équipe tout animal parmi la pluralité d'animaux d'élevage appartenant au troupeau ;
transmettre, au dispositif de communication d'informations de position donné, une instruction d'activation pour une fonction du dispositif de communication d'informations de position donné, la fonction étant destinée à acquérir des informations de position du dispositif de communication d'informations de position donné ; et
fournir en sortie les informations de position reçues en provenance du dispositif de communication d'informations de position donné.

2. Procédé de notification d'oestrus selon la revendication 1, comprenant en outre les étapes ci-dessous consistant à :
accepter une demande d'interruption pour la fonction du dispositif de communication d'informations de position donné ; et
transmettre une instruction d'interruption pour la fonction du dispositif de communication d'informations de position donné suite à l'acceptation de la demande d'interruption.

3. Appareil de notification d'oestrus (104) qui détermine l'oestrus sur la base d'un résultat de mesure de comptage de pas provenant d'un dispositif de mesure de comptage de pas équipant chaque animal d'une pluralité d'animaux d'élevage qui appartiennent chacun à un troupeau, l'appareil de notification d'oestrus (104) comprenant :
une unité d'acquisition (1101) qui est configurée de manière à acquérir le résultat de mesure de comptage de pas de chaque animal de la pluralité d'animaux d'élevage ;
une unité de détermination (1102) qui est configurée de manière à déterminer, pour chaque animal de la pluralité d'animaux d'élevage, si le résultat de mesure de comptage de pas acquis de l'animal d'élevage satisfait une condition donnée, et à déterminer que l'animal d'élevage est en oestrus si la condition donnée est satisfaite ;
une unité de recherche (1104) qui est configurée de manière à rechercher un dispositif de communication d'informations de position donné, si l'unité de détermination (1102) détermine qu'un animal d'élevage donné est en oestrus parmi la pluralité d'animaux d'élevage, le dispositif de communication d'informations de position donné correspondant à l'animal d'élevage donné, et dans lequel l'unité de recherche (1104) est configurée de manière à mettre en oeuvre la recherche sur la base d'informations du troupeau auquel appartient l'animal d'élevage donné et sur des informations d'un dispositif de communication d'informations de position qui est en mesure de fournir en sortie des informations de position et qui équipe tout animal parmi la pluralité d'animaux d'élevage appartenant au troupeau ;
une unité de transmission (1106) qui est configurée de manière à transmettre, au dispositif de communication d'informations de position donné récupéré par l'unité de recherche (1104), une instruction d'activation pour une fonction du dispositif de communication d'informations de position donné, la fonction étant destinée à acquérir des informations de position du dispositif de communication d'informations de position donné ; et
une unité de sortie (1107) qui est configurée de manière à fournir en sortie les informations de position reçues en provenance du dispositif de communication d'informations de position donné.

4. Appareil de notification d'oestrus (104) selon la revendication 3, comprenant en outre :
une unité d'acceptation (1107) qui accepte une demande d'interruption pour la fonction du dispositif de communication d'informations de position donné, dans lequel
l'unité de transmission (1106) transmet une instruction d'interruption pour la fonction du dispositif de communication d'informations de position donné si l'unité d'acceptation (1107) accepte la demande d'interruption.

5. Programme de notification d'oestrus exécuté par un ordinateur qui détermine l'oestrus sur la base d'un résultat de mesure de comptage de pas provenant d'un dispositif de mesure de comptage de pas équipant chaque animal d'une pluralité d'animaux d'élevage qui appartiennent chacun à un troupeau, le programme de notification d'oestrus amenant l'ordinateur à exécuter un procédé comprenant les étapes ci-dessous consistant à :
acquérir le résultat de mesure de comptage de pas de chaque animal de la pluralité d'animaux d'élevage ;
déterminer, pour chaque animal de la pluralité d'animaux d'élevage, si le résultat de mesure de comptage de pas acquis de l'animal d'élevage satisfait une condition donnée, et déterminer que l'animal d'élevage est en oestrus si la condition donnée est satisfaite ;
rechercher un dispositif de communication d'informations de position donné, dès lors qu'il a été déterminé qu'un animal d'élevage donné est en oestrus parmi la pluralité d'animaux d'élevage, le dispositif de communication d'informations de position donné correspondant à l'animal d'élevage donné, et l'étape de recherche étant basée sur des informations du troupeau auquel appartient l'animal d'élevage donné et sur des informations d'un dispositif de communication d'informations de position qui est en mesure de fournir en sortie des informations de position et qui équipe tout animal parmi la pluralité d'animaux d'élevage appartenant au troupeau ;
transmettre, au dispositif de communication d'informations de position donné, une instruction d'activation pour une fonction du dispositif de communication d'informations de position donné, la fonction étant destinée à acquérir des informations de position du dispositif de communication d'informations de position donné ; et
fournir en sortie les informations de position reçues en provenance du dispositif de communication d'informations de position donné.
